**Europäisches Patentamt**

**European Patent Office**

**Office européen des brevets**

(19)

(11) Veröffentlichungsnummer : **0 166 226 B2**

(12) **NEUE EUROPÄISCHE PATENTSCHRIFT**

(45) Veröffentlichungstag der neuen Patentschrift :
02.09.92 Patentblatt 92/36

(51) Int. Cl.⁵ : **A22C 13/00, A22C 13/02**

(21) Anmeldenummer : **85106421.2**

(22) Anmeldetag : **24.05.85**

(54) **Verfahren zum Herstellen eines zu einem faltenbalgartigen Hohlkörper gerafften Schlauchhüllenabschnitts für die Weiterverarbeitung als Schäldarm bei der Herstellung von Würstchen sowie danach hergestellter Hohlkörper.**

(30) Priorität : **26.06.84 AR 297017**

(43) Veröffentlichungstag der Anmeldung :
**02.01.86 Patentblatt 86/01**

(45) Bekanntmachung des Hinweises auf die
Patenterteilung :
**30.08.89 Patentblatt 89/35**

(45) Bekanntmachung des Hinweises auf die
Entscheidung über den Einspruch :
**02.09.92 Patentblatt 92/36**

(84) Benannte Vertragsstaaten :
**AT BE CH DE FR GB IT LI NL SE**

(56) Entgegenhaltungen :
EP-A- 73 321
EP-A- 0 100 495
EP-B- 27 586
DE-A- 1 800 792
DE-A- 2 111 662

(56) Entgegenhaltungen :
DE-A- 2 724 252
DE-A- 2 912 179
DE-A- 2 944 623
US-A- 2 148 884
US-A- 3 798 301
US-A- 4 230 767
**Gerhard Effenberger,
"Kunstdärme-Herstellung, Eigenschaften, Anwendung," 1976, Verlag der Rheinhessischen DruckwerkstätteAlzey**

(73) Patentinhaber : **Kollross, Günter
Am Wallerstädter Weg 20
W-6080 Gross Gerau-Dornheim (DE)**

(72) Erfinder : **Vinokur, Isaac
Soler 4418
Buenos Aires (AR)**

(74) Vertreter : **Beyer, Werner, Dipl.Ing. et al
Patentanwälte Beyer & Jochem
Staufenstrasse 36
W-6000 Frankfurt / Main (DE)**

## Beschreibung

Die Erfindung betrifft ein Verfahren zum Herstellen eines zu einem faltenbalgartigen Hohlkörper gerafften Schlauchfüllenabschnitts für die Weiterverarbeitung als Schäldarm bei der Herstellung von Würstchen, durch Formen einer flachen Folie unter Überlappung und Verbindung ihrer Längsränder zu einem Schlauch mit einer durchgehenden Längsnaht und anschließendes faltenbalgartiges Raffen des Schlauchs auf seiner gesamten Länge unter Bildung einer Vielzahl von Falten aus dem Hohlkörper, wobei der Schlauch zur Erzielung eines schraubenförmigen Verlaufs der Längsnaht am Hohlkörper gleichzeitig um seine Achse gedreht wird sowie einen derartigen zu einem Hohlkörper gerafften Schlauchabschnitt.

Ein solches Herstellungsverfahren und ein solcher geraffter Schlauchhüllenabschnitt sind aus der EP-A-0 100 495 bekannt.

Würstchen ohne Haut werden heute in großen Mengen auf Wurstfüllmaschinen unter Verwendung von Kunstdarm hergestellt, der zuvor in Abschnitten von beträchtlicher Länge, beispielsweise 30 m und mehr, zunächst zu faltenbalgartigen Hohlkörper gerafft wird. Die Hohlkörper werden dann auf das Füllrohr einer Wurstfüllmaschine aufgestockt, von wo der Kunstdarm mit dem Einfüllen von Fleischemulsion wieder abgezogen und dabei entrafft wird. Der dabei entstehende Wurststrang wird zu einzelnen Würstchen abgeteilt, gekocht und wieder abgekühlt. Schließlich wird die von dem Kunstdarm gebildete Haut vor dem Verpacken und dem Verkauf wieder abgeschält.

Als Kunstdarm für derart hergestellte Würstchen ohne Haut wird hauptsächlich extrudiertes Schlauchhüllenmaterial aus Zellulose verwendet, das sehr teuer ist. Von Nachteil ist ferner, daß die kollagenen Bestandteile der Fleischemulsion an dem Zellulosedarm anhaften, wodurch das Schälen der Würstchen erschwert wird. Diese Schwierigkeit läßt sich zwar durch besondere Behandlung des Zellulosematerials in gewissem Umfang beheben, was jedoch eine weitere Steigerung der ohnehin hohen Kosten mit sich bringt. Außerdem läßt sich Schlauchhüllenmaterial aus Zellulose wegen seiner Feuchtigkeits- und Temperaturempfindlichkeit nur unter besonderen Bedingungen und unter Verwendung kostspieliger Verpackungen lagern.

Der Erfindung liegt die Aufgabe zugrunde, diese Nachteile zu überwinden und die Herstellung von zu faltenbalgartigen Hohlkörpem gerafften Schlauchhüllenabschnitten für die Weiterverarbeitung als Schäldarm bei der Herstellung von Würstchen aus einem Material zu ermöglichen, das billig ist, ein leichtes Abschälen von der gekochten Fleischemulsion ohne besondere Behandlung gestattet und beim Lagern gegenüber Feuchtigkeit und erhöhten Umgebungstemperaturen unempfindlich ist.

Ausgehend von dem bekannten Verfahren der eingangs genannten Art löst die Erfindung diese Aufgabe verfahrensmäßig dadurch, daß die Folie durch dreischichtiges Extrudieren von Polypropylen mit Copolymeren in Form von drei untrennbaren Schichten hergestellt wird, von denen die mittlere Schicht eine größere Wandstärke und eine höhere mechanische Festigkeit als die beiden äußeren Schichten besitzt, während die beiden äußeren Schichten einen niedrigeren Schmelzpunkt aufweisen, daß daraufhin die Folie zur Erhöhung ihrer mechanischen Festigkeit biaxial gereckt wird und daß beim anschließenden Formen der Folie zum Schlauch die Verbindung ihrer Längsränder durch Verschweißung der beiden äußeren Schichten vorgenommen wird.

Polypropylen ist im Vergleich zu Zellulose ein sehr billiges Material. Daraus hergestelltes Folienmaterial zeichnet sich durch seine Wasserundurchlässigkeit sowie Feuchtigkeits- und Wärmeunempfindlichkeit aus. Seine Festigkeit ist jedoch gering. Es wird deshalb auf dem Verpackungssektor hauptsächlich dort eingesetzt, wo Schutz gegen das Eindringen von Feuchtigkeit ohne besondere mechanische Anforderungen verlangt wird wie beispielsweise bei der Verpackung von Zigaretten.

Es ist auch bekannt, die Festigkeit von Polypropylenfolien durch biaxiales Recken in Längs- und Querrichtung unmittelbar im Anschluß an das Extrudieren erheblich zu steigern. Ein solches biaxiales Recken setzt jedoch die ebene Ausbreitung der Folien voraus und läßt sich auf extrudiertes Schlauchmaterial praktisch nicht anwenden. Folien aus Polypropylen lassen sich außerdem nur schwer schweißen oder auf andere Weise fest zusammenfügen. All dies erklärt, warum bisher Polypropylen für Wursthüllen trotz seiner niedrigen Kosten und seiner leichten Trennbarkeit von der gekochten Fleischemulsion bei der Wurstherstellung keine Verwendung gefunden hat.

Die Erfindung überwindet diese Schwierigkeiten. Durch das dreischichtige Extrudieren von Polypropylen mit Copolymeren wird eine flache Folie mit schweißbaren Außenschichten geschaffen, die ein biaxiales Recken ermöglicht, bevor sie durch Überlappung und Verschweißung ihrer Ränder zu einem Schlauch mit einer durchgehenden Längsnaht geformt wird. Die Anhäufung der durch die Naht bedingten Schlauchverdikkung an einer bestimmten Stelle des Schlauchumfangs beim anschließenden Raffen des Schlauchs wird, wie bekannt, durch gleichzeitiges Drehen desselben verhindert, wodurch die Nahtstellen fortlaufend am Umfang des Hohlkörpers verteilt werden. Dadurch kann eine hohe Raffdichte ohne die Gefahr, daß sich der Hohlkörper krümmt, erzielt werden.

Das auf diesem Wege erhaltene Schlauchmaterial ist nichttoxisch und behält während des Kochvorgangs seine physikalisch-chemischen Eigenschaften bei. Es besitzt eine Elastizität, die es der Wursthülle ermöglicht, der Ausdehnung der Fleischemulsion während des Kochvorgangs sowie der Schrumpfung während des Abkühlens zu folgen. Dadurch bleibt die Oberfläche der Würstchen faltenfrei. Da die Emulsion zu keiner Zeit an der Schlauchhülle anhaftet, bereitet das Abziehen beim Schälen der Würstchen keine Schwierigkeiten.

Die nach dem erfindungsgemäßen Verfahren hergestellten Hohlkörper aus faltenbagartig gerafftem Polypropylenschlauch lassen sich, wie Versuche ergeben haben, auf Hochgeschwindigkeits-Füllmaschinen einwandfrei verarbeiten. Das auf das Füllrohr aufgestockte Schlauchhüllenmaterial läßt sich beim Füllen mit der Fleischemulsion ohne größeren Widerstand abziehen und dabei entfalten.

Eine Verbesserung im Hinblick auf die Dichte und Beständigkeit des faltenbalgartigen Hohlkörpers läßt sich in vorteilhafter Ausgestaltung des erfindungsgemäßens Verfahrens dadurch erzielen, daß der Schlauch nach dem Raffen zusammengepreßt und auf eine Temperatur zwischen 70° und 130 °C zwecks leicht lösbarer Verschmelzung der Falten untereinander erwärmt und schließlich zum Fixieren der Faltenprägung abgekühlt wird.

Das Zusammenpressen und Erwärmen hat zur Folge, daß das züsammengeraffte Schlauchhüllenmaterial seine glatte Form verliert und nach dem Abkühlen eine neue Gestalt annimmt, die durch das Anhaften der verschweißten Falten erhalten bleibt. Dadurch bleibt der mit seiner Vielzahl von Falten versehene und zusammengepreßte Schlauchhüllenabschnitt mit Hilfe der provisorischen Haftung solange auf seiner durch die Pressung erzielten kürzesten Länge, bis er beim Einfüllen der Fleischemulsion an der Füllmaschine wieder auseinandergezogen wird. Durch die Verschmelzung der Falten entsteht ferner ein starres Gebilde, das sich beim Füllen unter Mitnahme durch den Füllkopf der Wurstfüllmaschine schnell zu drehen vermag, während der sich füllende Darm gleichmäßig fortbewegt.

Ein zu einem faltenbalgartigen Hohlkörper geraffter Schlauchhüllenabschnitt zur Weiterverarbeitung, als Schäldarm bei der Herstellung von Würstchen, bestehend aus einer langgestreckten Folie, die miteinander überlappenden Längsrändern zu einem Schlauch verbunden ist, der axial zu einem Faltenbalg mit schraubenförmig verlaufender Längsnaht gerafft und zusammengepreßt ist, derart, daß die Falten vorübergehend aneinander haften und ein fortschreitendes Auseinanderziehen der Falten beim Füllen ermöglichen, zeichnet sich demzufolge erfindungsgemäß dadurch aus, daß die Folie aus drei untrennbar miteinander verbundenen Schichten aus Polypropylen mit Copolymeren besteht, die vor dem Formen zum Schlauch biaxial gereckt und beim Formen mit den Längsrändern verschweißt sind.

Die Erfindung wird nachstehend anhand eines in der Zeichnung dargestellten Ausführungsbeispiels näher erläutert. Es zeigen :

Fig. 1 einen Querschnitt durch ein Stück eines dreischichtigen Folienmaterials aus Polypropylen mit äußeren Schichten aus Copolymeren,

Fig. 2 in etwa doppelter natürlicher Größe einen Querschnitt durch einen aus einer Folie nach Fig. 1 durch Überlappen und Verschweißen ihrer dingsränder gebildeten Schlauch und

Fig. 3 in etwa natürlicher Größe eine Ansicht, teilweise im Axialschnitt, eines durch Raffen des Schlauchs in axialer Richtung gebildeten faltenbalgartigen Hohlkörpers.

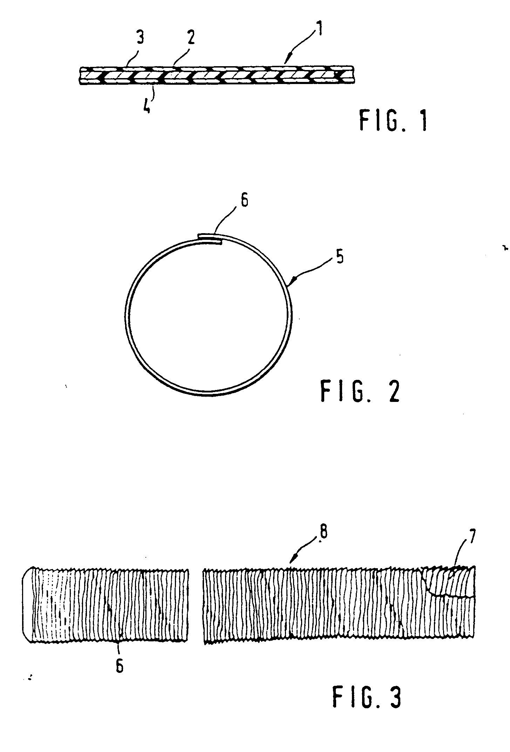

Fig. 1 zeigt in starker Vergrößerung einen Querschnitt durch ein Stück einer dreischichtig extrudierten Kunststoffolie 1. Die Folie besteht aus einer Mittelschicht 2 aus Polypropylen, mit der untrennbar auf beiden Seiten je eine äußere Schicht 3 bzw. 4 aus einem Copolymer zu Polypropylen verbunden ist. Die Mittelschicht 2 bildet die Seele der Folie 1 und hat eine größere Dicke und höhere mechanische Festigkeit als die beiden äußeren Schichten 3, 4, während letztere einen niedrigeren Schmelzpunkt als die Mittelschicht 1 aufweisen.

Die Folie hat eine Breite von etwa 70 mm und eine Wandstärke von etwa 10 μm. Die Folie 1 wird nach dem Extrudieren zunächst in Längs- und Querrichtung gereckt, wodurch in bekannter Weise das Polypropylen biorientiert und dadurch die mechanische Festigkeit der Folie wesentlich gesteigert wird.

Hieraufhin wird aus der Folie 1, wie aus Fg. 2 ersichtlich, durch Wölben um ihre Längserstreckung und Überlappen ihrer Längsränder ein zylindrischer Schlauch 5 von ca. 20 mm Durchmesser und beliebiger Länge gebildet. Dabei kommen im Überlappungsbereich die eine Außenschicht 3 und die anderen Außenschicht 4 in Berührung und werden durch geeignete Wärmeeinwirkung miteinander dauerhaft verschweißt. Die dadurch entstehende Längsnaht 6 hat folglich etwa die doppelte Dicke der Folie 1.

Hieraufhin wird der Schlauch 5 auf seiner gesamten Länge auf einer herkömmlichen Raffeinrichtung unter Bildung einer Vielzahl von Falten 7 faltenbalgartig zu einem Hohlkörper 8 gefaltet und gleichzeitig einer Drehbewegung um die eigene Achse ausgesetzt, damit die geradlinige Längsnaht 6 den aus Fig. 3 ersichtlichen schraubenförmigen verlauf erhält und dadurch ihre Überstärke auf den gesamten Umfang des Hohlkörpers 8 verteilt wird. Auf diese Weise erhält man eine gleichmäßige Faltung und Verdichtung, und gleichzeitig wird verhindert, daß sich der Hohlkörper 8 relativ zu seiner Längsachse krümmt.

Der so beschaffene Hohlkörper 8 wird danach einer geeigneten Zusammenpressung in Längsrichtung und einer Erwärmung auf eine Temperatur zwischen 70° und 130 °C unterworfen, wodurch ein leicht lösbares Ver-

3

schmelzen der Falten untereinander bewirkt wird. Durch anschließendes Abkühlen wird die neue Faltenprägung fixiert.

Der faltenbalgartig geraffte Hohlkörper 8 wird in bekannter Weise auf das Füllrohr einer Wurstfülläschine aufgesteckt, und sein vorderes Ende wird durch eine sogenannte Darmbremse hindurchgeführt und vor der Füllrohrmündung verschlossen. Daraufhin wird Fleichsemulsion durch das Füllrohr in den Schlauch gefüllt. In dem Maße, wie die Fleischfüllmaschine dies erfordert, wird sich der hierbei der zusammengefalltete Schlauch fortschreitend strecken und dabei die schwache Schweißverbindung der Falten untereinander wieder lösen. Letztere kann, falls gewünscht, durch Punktklebung mit einem geeigneten Klebemittel verstärkt werden.

Das Endprodukt zeichnet sich dadurch aus, daß des auf einem einfachen und wirtschaftlichen Herstellungsverfahren beruht, dessen Endergebnis eine Schlauchhülle zu dem vorgenannten Zweck ist, welche aus einer dreischichtig extrudierten Folie in Gestalt eines faltenbalgartig gefalteten und zusammengepreßten Schlauchs mit schraubenförmig verlaufender Längsnaht besteht, dessen vielzählige Falten vorübergehend aneinander haften und sich danach langsam und fortschreitend infolge des interenen Schubdruckes beim Füllen den Schlauches mit der den Wurststrang bildenden Fleischemulsion wieder entfalten.

Es ist selbstverständlich möglich, bei der praktischen Anwendung der Erfindung bestimmte Einzeiheiten im Rahmen der nachfolgend beanspruchten Erfindungsmerkmale zu verändern.

## Patentansprüche

1. Verfahren zum Herstellen eines zu einem faltenbalgartigen Hohlkörper gerafften Schlauch. hüllenabschnitts für die Weiterverarbeitung als Schäldarm bei der Herstellung von Würstchen, durch Formen einer flachen Folie (1) unter Überlappung und Verbindung ihrer Längsränder zu einem Schlauch (5) mit einer durchgehenden Längsnaht (6) und anschließendes faltenbalgartiges Raffen des Schlauchs (5) auf seiner gesamten Länge unter Bildung einer Vielzahl von Falten (7) zu dem Hohlkörper (8), wobei der Schlauch (5) zur Erzielung eines schraubenförmigen Verlaufs der Längsnaht (6) am Hohlkörper (8) gleichzeitig um seine Achse gedreht wird, dadurch gekennzeichnet, daß die Folie (1) durch dreischichtiges Extrudieren von Polypropylen mit Copolymeren in Form von drei untrennbaren Schichten (2, 3, 4) hergestellt wird, von denen die mittlere Schicht (2) eine größere Wandstärke und eine höhere mechanische Festigkeit als die beiden äußeren Schichten (3, 4) besitzt, während die beiden äußeren Schichten (3, 4) einen niedrigeren Schmelzpunkt aufweisen, daß daraufhin die Folie (1) zur Erhöhung ihrer mechanischen Festigkeit biaxial gereckt wird und daß beim anschließenden Formen der Folie (1) zum Schlauch (5) die Verbindung ihrer Längsränder durch Verschweißung der beiden äußeren Schichten (3, 4) vorgenommen wird.

2. Verfahren nach Anspruch 1, dadurch gekennzeichnet, daß der Schlauch (5) nach dem Raffen zusammengepreßt und auf eine Temperatur zwischen 70° und 130 °C zwecks leicht lösbarer Verschmelzung der Falten (7) untereinander erwärmt und schließlich zum Fixieren der Faltenprägung abgekühlt wird.

3. Zu einen faltenbalgartigen Hohlkörper (8) geraffter Schlauchhüllenabschnitt zur Weiterverarbeitung als Schäldarm bei der Herstellung von Würstchen, bestehend aus einer langgestreckten Folie (1), die mit einander überlappenden Längsrändern zu einem Schlauch (5) verbunden ist, der axial zu einem Faltenbalg mit schraubenförmig verlaufender Längsnaht (6) gerafft und zusammengepreßt ist, derart, daß die Falten (7) vorübergehend aneinander haften und ein fortschreitendes Auseinanderziehen der Falten beim Füllen ermöglichen, dadurch gekennzeichnet daß die Folie (1) aus drei untrennbar miteinander verbundenen Schichten (2, 3, 4) aus Polypropylen mit Copolymeren besteht, die vor dem Formen zum Schlauch biaxial gereckt und beim Formen mit den Längsrändern verschweißt sind.

## Revendications

1) Procédé de fabrication d'un boyau plissé en forme de corps creux à soufflet en vue de son utilisation ultérieure comme peau à peler dans la fabrication de saucisses, à partir d'une pellicule plane (1), par recouvrement et solidarisation de ses bords longitudinaux de manière à former un boyau (5) à soudure longitudinale (6), puis serrage en soufflet du boyau (5) sur toute sa longueur par formation d'une pluralité de plis (7) sur le corps creux (8), procédé dans lequel le boyau (5) est mis en rotation simultanée autour de son axe en vue de réaliser un tracé hélicoïdal de la soudure longitudinale (6) sur le corps creux (8), caractérisé en ce que la pellicule (1) est obtenue par extrusion en trois couches de polypropylène avec des copolymères sous forme de trois couches indissociables (2, 3, 4), la couche médiane (2) ayant une épaisseur et une résistance mécanique supérieures à celles des deux couches extérieures (3, 4), tandis que les deux couches extérieures (3, 4) présentent un point de fusion plus bas ; en ce que la pellicule (1) est ensuite étirée biaxialement pour accroître sa résistance mécanique et en ce que, lors de la transformation ultérieure de la pellicule (1) en boyau (5), la jonction de ses bords longitudinaux est réalisée par soudage des deux couches extérieures (3, 4).

2) Procédé selon la revendication 1, caractérisé en ce qu'après le serrage le boyau (5) est comprimé et chauffé à une température comprise entre 70 et 130° C en vue d'une fusion facilement défaisable des plis (7) entre eux, puis refroidi pour fixer le gaufrage des plis.

3) Boyau plissé (5) en forme d'un corps creux (8) à soufflet pour utilisation ultérieure comme peau à peler dans la fabrication de saucisses, composé d'une pellicule allongée (1) formée en boyau (5) par chevauchement de ses bords longitudinaux, ledit boyau (5) étant serré et comprimé axialement pour former un soufflet à soudure longitudinale (6) hélicoïdale, de manière que les plis (7) adhérent temporairement entre eux et puissent être séparés progressivement lors du remplissage, caractérisé par le fait que la pellicule (1) est composée de trois couches indissociables (2, 3, 4) de polypropylène et de copolymères, qui sont étirées biaxialement avant la formation en boyau et sont soudées par leurs bords longitudinaux au cours de ladite formation en boyau.

## Claims

1. A method for the production of a tubular casing shirred to form a bellows-like hollow body, for further processing as a peelable skin in the manufacture of sausages, by forming a flat sheet (1) while overlapping and joining its longitudinal edges to form a tube (5) with a continuous longitudinal seam (6) and subsequent bellows-like shirring of the tube (5) over its entire length while forming a plurality of pleats (7) to form the hollow body (8), wherein to provide a thread-like course of the longitudinal seam (6) along the hollow body (8) the tube (5) is simultaneously rotated about its axis, **characterised in that** the sheet (1) is produced by three-layered extrusion of polypropylene with copolymers in the form of three inseparable layers (2, 3, 4), of which the middle layer (2) is of greater wall thickness and has higher mechanical strength than the two outer layers (3, 4), while the two outer layers (3, 4) have a lower melting point, in that subsequently the sheet (1) is stretched biaxially to increase its mechanical strength and in that during the subsequent forming of the sheet (1) into the tube (5) the joining of its longitudinal edges is carried out by weld-ing the two outer layers (3, 4).

2. A method according to Claim 1, **characterised in that**, after shirring, the tube (5) is compressed and heated to a temperature of between 70° and 130° C for the purpose of fusing together the pleats (7) into an easily separable condition and, finally, is cooled for the purpose of fixing the pleated shape.

3. A tubular casing shirred to form a bellows-like hollow body (8), for further processing as a peelable skin in the manufacture of sausages, comprising a longitudinally stretched sheet (1) which is joined at mutually overlapping longitudinal edges to form a tube (5), which is shirred axially to form a bellows with a helically extending longitudinal seam (6), and is compressed so that the pleats (7) temporarily adhere to one another and make it possible for the pleats to be progressively drawn apart during the stuffing operation, **characterised in that** the sheet (1) is composed of three inseparably joined layers (2, 3, 4) of polypropylene with copolymers, which are stretched biaxially, prior to being formed into a tube, and which are welded at the longitudinal edges during the forming operation.

FIG. 1

FIG. 2

FIG. 3